# EUROPÄISCHE PATENTSCHRIFT

(11) **EP 1 329 625 B1**
(45) Veröffentlichungstag und Bekanntmachung des Hinweises auf die Patenterteilung: **22.02.2006**
(21) Anmeldenummer: 02025972.7
(22) Anmeldetag: 21.11.2002
(51) Int. Cl.: F02D 41/14, F02D 41/30

(54) **Verfahren, Computerprogramm, Steuer- und/oder Regelgerät zum Betreiben eines Kraftstoffsystems einer Brennkraftmaschine, sowie Brennkraftmaschine**
Method, computer programme, control and/or regulation device for operation of an internal combustion engine, and internal combustion engine
Procédé, programme informatique et appareil de commande et/ou regulation destinés a l'utilisation d'un moteur à combustion interne, et moteur à combustion interne

(30) Priorität: 11.01.2002 DE 10200795
(43) Veröffentlichungstag der Anmeldung: 23.07.2003
(73) Patentinhaber: ROBERT BOSCH GMBH, 70442 Stuttgart (DE)
(72) Erfinder: Joos, Klaus, 74399 Walheim (DE); Wolber, Jens, 70839 Gerlingen (DE); Frenz, Thomas, 86720 Noerdlingen (DE); Amler, Markus, 71229 Leonberg-Gebersheim (DE); Khare, Mangesh, 2nd Stage, 1st Phase, Bangalore-560 076 (IN)

(56) Entgegenhaltungen:
- DE-A- 19 547 644
- DE-A- 19 951 410
- US-A- 5 902 346
- PATENT ABSTRACTS OF JAPAN vol. 2000, no. 16, 8. Mai 2001 (2001-05-08) & JP 2001 012291 A (DENSO CORP), 16. Januar 2001 (2001-01-16)

## Beschreibung

### Stand der Technik

Die Erfindung betrifft zunächst ein Verfahren zum Betreiben eines Kraftstoffsystems einer Brennkraftmaschine, bei dem eine Temperatur einer Komponente des Kraftstoffsystems oder eine Temperatur des Kraftstoffs in dieser Komponente anhand von Zustandsgrößen der Brennkraftmaschine geschätzt und die geschätzte Temperatur bei der Steuerung und/oder Regelung mindestens einer Komponente des Kraftstoffsystems berücksichtigt wird.

Ein solches Verfahren ist aus der DE 199 51 410 A1 bekannt. In dieser ist ein Kraftstoffsystem für eine Brennkraftmaschine mit Direkteinspritzung beschrieben. Dabei fördert eine Niederdruckpumpe Kraftstoff zu einer Hochdruckpumpe. Von dort gelangt der Kraftstoff über eine Kraftstoff-Sammelleitung und Einspritzventile in den Einspritzventilen zugeordnete Brennräume. Die Niederdruck-Kraftstoffpumpe ist bedarfsgeregelt und fördert den Kraftstoff mit einem gewünschten Vordruck zur Hochdruckpumpe.

Die Hochdruck-Kraftstoffpumpe verdichtet den Kraftstoff üblicherweise von einem,Vordruck von ungefähr 6 bar auf einen Druck von bis zu 200 bar. Während des Saugtaktes der Hochdruck-Kraftstoffpumpe kann es in deren Förderraum zur Bildung von Kraftstoffdampf bzw. zu Kavitation kommen, was den Wirkungsgrad der Hochdruck-Kraftstoffpumpe beeinträchtigt. Das Auftreten eines solchen Kraftstoffdampfes bzw. einer solcher Kavitation hängt zum einen vom Vordruck ab, welcher von der Niederdruck-Kraftstoffpumpe bereitgestellt wird, und zum anderen von der Temperatur des Kraftstoffes in der Hochdruck-Kraftstoffpumpe. Um die Niederdruck-Kraftstoffpumpe immer mit möglichst geringer Leistung, also für einen möglichst niedrigen Vordruck, ansteuern zu können, ist daher eine möglichst genaue Kenntnis der Temperatur des Kraftstoffes in der Hochdruck-Kraftstoffpumpe erforderlich.

Bei dem bekannten Kraftstoffsystem wird hierzu vorgeschlagen, die Temperatur des Kraftstoffes anhand eines physikalischen Modells der Hochdruck-Kraftstoffpumpe abzuschätzen. In dieses physikalische Modell werden verschiedenen Zustandsgrößen der Brennkraftmaschine eingespeist.

Die DE 100 16 474 A1 beschreibt ein Verfahren zur Ansteuerung eines Einspritzventils mit einem piezoelektrischen Aktor. Da der Hub eines Piezoaktors nicht nur von der Ansteuerenergie, sondern auch von seiner Temperatur abhängt, wird bei diesem Verfahren die Umgebungstemperatur erfasst und hieraus die Temperatur des Aktors zur Korrektur seiner Ansteuerenergie abgeschätzt.

Aufgabe der vorliegenden Erfindung ist es, ein Verfahren der eingangs genannten Art so weiterzubilden, dass die Steuerung und/oder Regelung einer Komponente des Kraftstoffsystems mit noch höherer Präzision möglich ist, wobei die Kosten des Kraftstoffsystems möglichst niedrig sein sollen.

Diese Aufgabe wird bei einem Verfahren der eingangs genannten Art dadurch gelöst, dass zur Schätzung der Temperatur der Komponente des Kraftstoffsystems mittels Addition oder Subtraktion eine Summe bzw. Differenz aus mindestens zwei Temperaturanteilen gebildet wird, wobei der eine Temperaturanteil aus der Temperatur der Brennkraftmaschine und der andere Temperaturanteil aus einer weiteren Zustandsgröße der Brennkraftmaschine gewonnen wird.

### Vorteile der Erfindung

Der Vorteil des erfindungsgemäßen Verfahrens liegt darin, dass anstelle eines komplexen physikalischen Modells ein einfaches mathematisches Modell zur Abschätzung der Komponententemperatur verwendet wird. Da ein solches mathematisches Modell leicht zu programmieren ist und nur einen geringen Rechenaufwand verursacht, können ggf. auch mehrere oder sogar eine große Anzahl von Zustandsgrößen bei der Abschätzung der Komponententemperatur berücksichtigt werden, was der Präzision der Abschätzung der Komponententemperatur zugute kommt. Zusätzliche Sensoren zur Abschätzung der Komponententemperatur sind dabei nicht erforderlich.

Das erfindungsgemäße Verfahren beruht dabei auf der Erkenntnis, dass fast alle temperaturrelevanten Komponenten des Kraftstoffsystems im Bereich des Motorblocks der Brennkraftmaschine oder sogar direkt an diesem angeordnet sind. Die Wärmeleitung vom Motorblock her spielt somit für die Temperatur der entsprechenden Komponente die wichtigste Rolle und ist daher in jedem Falle zu berücksichtigen. Zu dem sich aus der Temperatur der Brennkraftmaschine ergebenden Temperaturanteil der Komponente können dann die anderen Temperaturanteile, welche auf anderen Zustandsgrößen als der Temperatur der Brennkraftmaschine beruhen, einfach addiert bzw. von diesem subtrahiert werden.

Vorteilhafte Weiterbildungen der Erfindung sind in Unteransprüchen angegeben.

In einer ersten Weiterbildung des erfindungsgemäßen Verfahrens wird vorgeschlagen, dass als Temperatur der Brennkraftmaschine die Temperatur eines Kühlfluids der Brennkraftmaschine verwendet wird. Insbesondere bei Brennkraftmaschinen mit Wasserkühlung reagiert die Temperatur des Kühlwassers sehr rasch auf Änderungen der Temperatur der Brennkraftmaschine bzw. des Motorblocks der Brennkraftmaschine. Sie bietet somit einen präzisen Anhaltspunkt für die Temperatur der Brennkraftmaschine. Darüber hinaus wird diese Temperatur bei fast allen Brennkraftmaschinen ohnehin erfasst.

Vorgeschlagen wird auch, dass als weitere Zustandsgröße eine Kühlfluidtemperatur, eine Schmierstofftemperatur, eine Ansauglufttemperatur, eine Geschwindigkeit eines Transportgeräts, in welches die Brennkraftmaschine eingebaut ist, eine Kraftstoffmasse, welche von einer Hochdruck-Kraftstoffpumpe gefördert wird, eine Drehzahl der Brennkraftmaschine, ein Betriebszustand der Brennkraftmaschine, ein Kraftstoffdruck, eine Umgebungstemperatur, ein Füllstand eines Kraftstoff-Vorratsbehälters und/oder eine Drehzahl der Hochdruck-Kraftstoffpumpe verwendet wird.

All diese Zustandsgrößen haben einen mehr oder wenigen starken direkten Einfluss auf die meisten Komponenten des Kraftstoffsystems. Auch bei einer nur teilweisen Berücksichtigung dieser Zustandsgrößen ist daher eine sehr genaue Abschätzung der Temperatur der Komponente des Kraftstoffsystems möglich.

Im Einzelnen können Kühlfluid-, Schmierstoff- und Ansaugluft Wärmeenergie von der Komponente, deren Temperatur abgeschätzt werden soll, abführen. Auch ein von der Geschwindigkeit eines Transportgeräts, beispielsweise eines Kraftfahrzeugs, in welches die Brennkraftmaschine eingebaut ist, abhängiger Kühlluftstrom kann die Temperatur der Komponente beeinflussen. Ferner kann auch der Kraftstoff, der vom Kraftstoffsystem gefördert wird, Energie von der besagten Komponente ableiten.

Eine hohe Drehzahl der Brennkraftmaschine kann dagegen zu einer höheren Leistung der Komponente führen, deren Temperatur abgeschätzt werden soll, was ggf. deren Temperatur wiederum erhöht. Auch ein Betriebszustand der Brennkraftmaschine, beispielsweise der Betriebszustand Homogen, Mager, Schicht etc., kann die Wärmebelastung einzelner Komponenten des Kraftstoffsystems verändern. Der Füllstand eines Kraftstoff-Vorratsbehälters beeinflusst wiederum die Kraftstofftemperatur und hierdurch ebenfalls indirekt die Temperatur der besagten Komponente des Kraftstoffsystems.

Besonders vorteilhaft ist es, wenn mindestens einer der Temperaturanteile vor der Summenbildung einem Verzögerungsglied, insbesondere einem Tiefpassfilter, zugeführt wird. Hierdurch wird der Tatsache Rechnung getragen, dass Änderungen einer Zustandsgröße der Brennkraftmaschine erst mit einer gewissen zeitlichen Verzögerung zu einer Änderung der Temperatur der fraglichen Komponente führen. Die Präzision des Verfahrens wird durch diese Weiterbildung erhöht, wobei die softwaretechnische Realisierung dennoch sehr einfach ist.

Möglich ist auch, dass mindestens einer der Temperaturanteile nur dann berücksichtigt wird, wenn die entsprechende Zustandsgröße einen Grenzwert mindestens erreicht. Hierdurch wird der Rechenaufwand in manchen Betriebszuständen der Brennkraftmaschine reduziert, und die Präzision der Schätzung der Temperatur der Komponente wird erhöht, da der Einfluss der Zustandsgrößen dann, wenn diese einen geringen Wert aufweisen, überproportional gering sein kann.

Vorteilhaft ist auch jene Weiterbildung des erfindungsgemäßen Verfahrens, bei der bei einem Heißstart der Brennkraftmaschine ein Temperaturanteil addiert wird, der von einem Anfangswert in einem bestimmten Zeitraum auf Null zurückgeht. Hierdurch wird berücksichtigt, dass es nach dem Abstellen der Brennkraftmaschine zu einer Erwärmung der Brennkraftmaschine und der besagten Komponente des Kraftstoffsystems kommen kann. Eine einfache Möglichkeit der Realisierung besteht beispielsweise aus einem Tiefpassfilter, welcher mit dem Anfangswert des Temperaturanteils initialisiert wird.

Dabei kann der Anfangswert des Temperaturanteils von der Differenz zwischen der aktuellen Temperatur der Brennkraftmaschine und der Temperatur der Brennkraftmaschine zum Zeitpunkt des Ausschaltens abhängen. Dies erhöht nochmals die Präzision der Abschätzung der Temperatur der Komponente.

Sinnvoll ist die Berücksichtigung dieses Temperaturanteils jedoch hauptsächlich dann, wenn die aktuelle Temperatur der Brennkraftmaschine einen Grenzwert mindestens erreicht. Bei geringen Temperaturen der Brennkraftmaschine kann im Allgemeinen kein Heißstart vorliegen.

Eine einfach zu realisierende Möglichkeit, den Temperaturanteil zu bestimmen, besteht darin, dass der Temperaturanteil aus der entsprechenden Zustandsgröße durch Multiplikation der Zustandsgröße mit einem Umwandlungsfaktor oder durch die Einspeisung der Zustandsgröße in eine Kennlinie gewonnen wird.

Bei einer bevorzugten Ausgestaltung des erfindungsgemäßen Verfahrens handelt es sich bei der Komponente des Kraftstoffsystems, deren Temperatur abgeschätzt wird, um die Hochdruck-Kraftstoffpumpe und/oder um eine Hochdruck-Einspritzvorrichtung, mit der der Kraftstoff in einen Brennraum der Brennkraftmaschine gelangt.

Dabei wird wiederum besonders bevorzugt, wenn die Ansteuerung eines Mengensteuerventils der Hochdruck-Kraftstoffpumpe und/oder die Ansteuerung der Leistung einer Niederdruck-Kraftstoffpumpe von der geschätzten Temperatur der Hochdruck-Kraftstoffpumpe abhängt, und/oder die Ansteuerung eines Aktors der Hochdruck-Einspritzvorrichtung von der geschätzten Temperatur der Hochdruck-Einspritzvorrichtung abhängt.

Mit einem Mengensteuerventil wird üblicherweise die Fördermenge der Hochdruck-Kraftstoffpümpe eingestellt. Im Allgemeinen verfügt das Mengensteuerventil über einen Magnetaktor. Dessen Leistung ist wiederum von seiner Temperatur abhängig. Durch die Kenntnis der Temperatur der Hochdruck-Kraftstoffpumpe kann leicht auf die Temperatur des Mengensteuerventils und weiter auf die Temperatur des Magnetaktors geschlossen werden. Die Ansteuerung des Mengensteuerventils und somit die Einstellung der von der Hochdruck-Kraftstoffpumpe geförderten Kraftstoffmenge ist somit mit noch höherer Präzision möglich.

Eine weitere Ursache für die Temperaturabhängigkeit des Förderverhaltens der Hochdruck-Kraftstoffmenge liegt in der Änderung der Kraftstoffeigenschaft mit der Temperatur (insbesondere des E-Moduls und der Dichte).

Die Ansteuerung der Leistung einer Niederdruck-Kraftstoffpumpe abhängig von der geschätzten Temperatur der Hochdruck-Kraftstoffpumpe hat den Vorteil, dass auf diese Weise die Bildung von Dampfblasen in der Hochdruck-Kraftstoffpumpe zuverlässig vermieden werden kann. Abhängig von der Temperatur in der Hochdruck-Kraftstoffpumpe kann nämlich der Druck ermittelt werden, der von der Niederdruck-Kraftstoffpumpe erzeugt werden muss, so dass in der Hochdruckpumpe gerade noch keine Dampfblasen auftreten bzw. keine Kavitation auftritt.

Förderprobleme der Hochdruck-Kraftstoffpumpe und Druckeinbrüche werden somit zuverlässig vermieden. Gleichzeitig werden unnötig lange Betriebszeiten mit einem hohen Vordruck bei dessen pauschaler Anhebung vermieden. Hierdurch sinkt das Geräusch der Niederdruck-Kraftstoffpumpe, der Kraftstoffverbrauch der Brennkraftmaschine insgesamt, und die Lebensdauer der Niederdruck-Kraftstoffpumpe wird verlängert.

Die Abhängigkeit der Ansteuerung eines Aktors der Hochdruck-Einspritzvorrichtung von der geschätzten Temperatur der Hochdruck-Einspritzvorrichtung basiert auf der Erkenntnis, dass der Aktor, insbesondere ein Piezofaktor, bei der Ansteuerung eine starke Temperaturabhängigkeit aufweist. Bei der Anwendung der Hochdruck-Einspritzvorrichtung bei einer Brennkraftmaschine mit Kraftstoff-Direkteinspritzung bedeutet dies, dass sich der Hub des Ventilelements der Kraftstoff-Einspritzvorrichtung und das zeitliche Öffnungs- und Schließverhalten und damit der Durchfluss durch die Hochdruck-Einspritzvorrichtung temperaturabhängig ändern. Zum optimalen Betrieb einer Brennkraftmaschine ist es jedoch erforderlich, dass bei gleicher Ansteuerdauer der Hochdruck-Kraftstoffeinspritzvorrichtung die gleiche Kraftstoffmasse zugemessen wird.

Dabei sind im Wesentlichen zwei Effekte zu beachten: Zum einen ändert sich temperaturabhängig das Hubvermögen des Piezoaktors. Dies bedeutet, dass die Ansteuerspannung so korrigiert werden muss, dass sich stets der gleiche Hub des Ventilelements und damit der gleiche statische Durchfluss durch die Hochdruck-Einspritzvorrichtung einstellt. Zum anderen ändert sich mit der Temperatur die Kapazität des Piezoaktors, was sich in einer Änderung der Öffnungs- und Schließzeit des Ventils äußert. Um diesen Effekt kompensieren zu können, muss der Ladestrom angepasst werden. Nur so können konstante Öffnungs- und Schließzeiten realisiert werden. Die Kenntnis der Temperatur der Hochdruck-Einspritzvorrichtung und hierdurch des Aktors ermöglicht somit eine besonders präzise Zumessung des Kraftstoffs in den jeweiligen Brennraum.

Die Erfindung betrifft auch ein Computerprogramm, welches zur Durchführung des Verfahrens der obigen Art geeignet ist, wenn es auf einem Computer ausgeführt wird. Dabei wird besonders bevorzugt, wenn das Computerprogramm auf einem Flash-Memory abgespeichert ist.

Ferner betrifft die Erfindung ein Steuer- und/oder Regelgerät zum Betreiben einer Brennkraftmaschine. Dabei wird wiederum bevorzugt, wenn es einen Speicher umfasst, auf dem ein Computerprogramm der obigen Art abgespeichert ist.

Gegenstand der Erfindung ist auch eine Brennkraftmaschine, mit einem Kraftstoffsystem mit mehreren Komponenten, mit Erfassungseinrichtungen, welche Zustandsgrößen der Brennkraftmaschine erfassen, und mit einem Steuer- und/oder Regelgerät, welches so ausgebildet ist, dass es eine Temperatur einer Komponente des Kraftstoffsystems oder eine Temperatur des Kraftstoffes in dieser Komponente anhand von Zustandsgrößen der Brennkraftmaschine schätzen und eine Komponente des Kraftstoffsystems abhängig von der geschätzten Temperatur steuern und/oder regeln kann.

Um die Präzision bei der Steuerung und/oder Regelung einer Komponente des Kraftstoffsystems zu verbessern, wird vorgeschlagen, dass das Steuer- und Regelgerät so ausgebildet ist, dass es zur Abschätzung der Temperatur der Komponente des Kraftstoffsystems mittels Addition oder Subtraktion eine Summe bzw. eine Differenz aus mindestens zwei Temperaturanteilen bildet, wobei der eine Temperaturanteil aus der erfassten Temperatur der Brennkraftmaschine und der andere Temperaturanteil aus einer weiteren erfassten Zustandsgröße der Brennkraftmaschine gewonnen wird.

In Weiterbildung hierzu wird vorgeschlagen, dass die Brennkraftmaschine ein Steuer- und/oder Regelgerät der obigen Art umfasst.

### Zeichnung

Nachfolgend werden bevorzugte Ausführungsbeispiele der Erfindung unter Bezugnahme auf die beiliegende Zeichnung im Detail erläutert. In der Zeichnung zeigen:
- Figur 1: eine Prinzipdarstellung einer Brennkraftmaschine mit einem Kraftstoffsystem mit einer Hochdruck-Kraftstoffpumpe und einer Kraftstoff-Einspritzvorrichtung;
- Figur 2: eine schematische Darstellung des Verfahrensablaufs zur Abschätzung der Temperatur der Hochdruck-Kraftstoffpumpe von Figur 1;
- Figur 3: eine Darstellung ähnlich Figur 2 für den Fall des Heißstarts der Brennkraftmaschine von Figur 1;
- Figur 4: eine Darstellung, welche die Grundsätze der Ansteuerung der Kraftstoff-Einspritzvorrichtung von Figur 1 zeigt;
- Figur 5: eine Darstellung ähnlich der Figuren 2 und 3, welche ein Verfahren zur Abschätzung der Temperatur der Kraftstoff-Einspritzvorrichtung von Figur 1 zeigt.

### Beschreibung der Ausführungsbeispiele

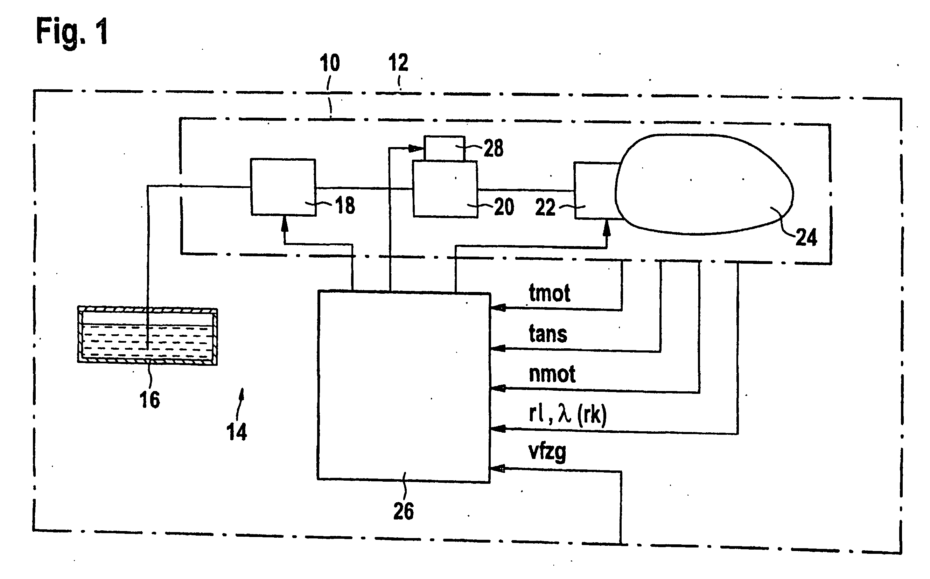

In Figur 1 trägt eine Brennkraftmaschine insgesamt das Bezugszeichen 10. Sie ist in ein Kraftfahrzeug 12 eingebaut. Die Brennkraftmaschine 10 umfasst ein Kraftstoffsystem 14.

Das Kraftstoffsystem 14 umfasst einen Kraftstoffbehälter 16, aus dem eine Niederdruck-Kraftstoffpumpe 18 Kraftstoff zu einer Hochdruck-Kraftstoffpumpe 20 fördert. Diese ist direkt am Motorblock (nicht dargestellt) befestigt und versorgt wiederum eine Kraftstoff-Einspritzvorrichtung 22 mit Kraftstoff. Diese spritzt den Kraftstoff direkt in einen Brennraum 24 der Brennkraftmaschine 10 ein.

Die Förderleistung der Niederdruck-Kraftstoffpumpe 18 wird von einem Steuer- und Regelgerät 26 eingestellt. Dieses steuert auch ein Mengensteuerventil 28 an, welches die Förderleistung der Hochdruck-Kraftstoffpumpe 20 beeinflusst. Ferner wird ein in der Figur nicht dargestellter Piezoaktor der Kraftstoff-Einspritzvorrichtung 22 vom Steuer- und Regelgerät 26 angesteuert.

In der Figur ebenfalls nicht dargestellte Sensoren erfassen eine Temperatur tmot des Kühlwassers der Brennkraftmaschine. 10, eine Temperatur tans der Ansaugluft, eine Drehzahl nmot einer Kurbelwelle der Brennkraftmaschine 10, eine Luftfüllung rl, einen Lambdawert lambda sowie eine Fahrzeuggeschwindigkeit vfzg. Die entsprechenden Signale werden dem Steuer- und Regelgerät 26 zugeführt. In einem nicht dargestellten Ausführungsbeispiel werden auch ein aktueller Kraftstoffdruck, eine Umgebungstemperatur, ein Füllstand des Kraftstoffbehälters, eine Temperatur eines Schmierstoffes der Brennkraftmaschine etc., dem Steuer- und Regelgerät zugeführt.

Bei der Hochdruck-Kraftstoffpumpe 20 handelt es sich um eine 1-Zylinder-Kolbenpumpe, welche den Kraftstoff bis auf 200 bar verdichten kann. Damit der Wirkungsgrad der Hochdruck-Kraftstoffpumpe 20 optimal ist, sollte in ihrem Förderraum und in dem stromaufwärts vom Förderraum gelegenen Bereich des Kraftstoffsystems 14 kein dampfförmiger Kraftstoff vorhanden sein. Der Druck in diesen Bereichen sollte daher immer knapp oberhalb des aktuellen Dampfdrucks des sich in diesen Bereichen befindlichen Kraftstoffes sein. Dies wird durch eine entsprechende Ansteuerung der Niederdruck-Kraftstoffpumpe 18 sichergestellt.

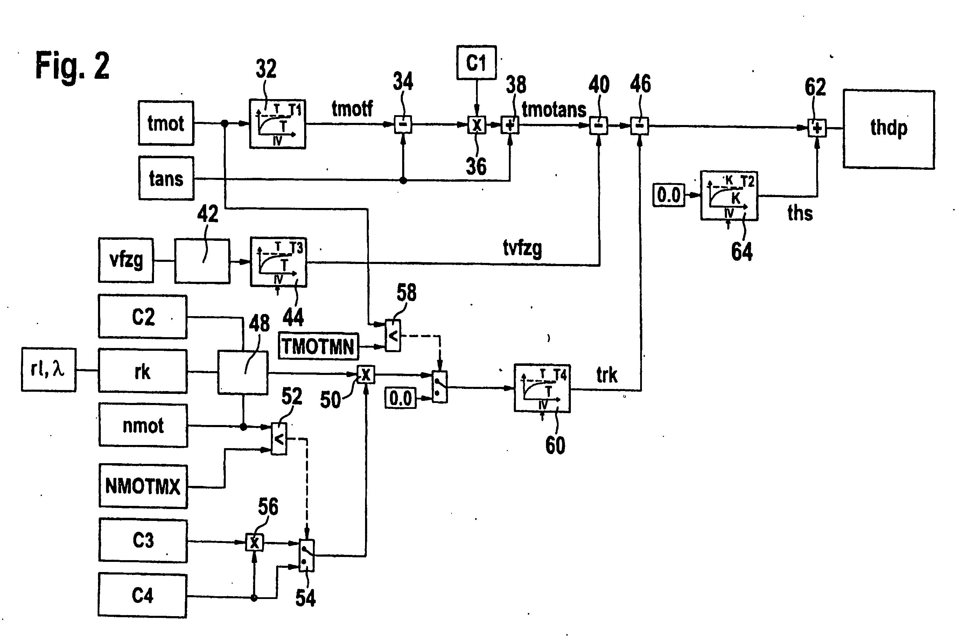

Der aktuelle Dampfdruck des Kraftstoffes ist jedoch von dessen aktueller Temperatur in der Hochdruck-Kraftstoffpumpe abhängig. Versuche haben gezeigt, dass die Temperatur des Kraftstoffes in der Hochdruck-Kraftstoffpumpe 20 wiederum im Wesentlichen der Temperatur der Hochdruck-Kraftstoffpumpe 20 selbst entspricht. Ein Verfahren zur präzisen und dennoch einfachen Abschätzung einer Temperatur thdp der Hochdruck-Kraftstoffpumpe 20 ist in Figur 2 dargestellt:

Die Kühlwassertemperatur tmot (Block 30) bildet einen Temperaturanteil tmotf der Temperatur thdp der Hochdruck-Kraftstoffpumpe 20. Er wird in einen Tiefpassfilter T1 (Block 32) eingespeist. Durch diesen wird erreicht, dass Änderungen der Kühlwassertemperatur tmot nur mit einer gewissen zeitlichen Verzögerung weitergegeben werden. Hierdurch können Wärmeleitungseffekte berücksichtigt werden. In 34 wird die Differenz zwischen der Ansauglufttemperatur tans und der Kühlwassertemperatur tmotf gebildet und in 36 mit einem Faktor C1 multipliziert. Das Ergebnis wird in 38 zur Kühlwassertemperatur tans addiert. Durch den Faktor C1 wird eine Gewichtung des Einflusses der Kühlwassertemperatur tmot und der Ansauglufttemperatur tans auf die Temperatur thdp der Hochdruck-Kraftstoffpumpe 20 bewirkt. Bei C1 > 0,5 überwiegt der Einfluss der Kühlwassertemperatur tmot, bei C1 < 0,5 überwiegt der Einfluss der Ansauglufttemperatur tans.

Das Ergebnis aus 38 ist also ein Temperaturanteil tmotans der Temperatur thdp der Hochdruck-Kraftstoffpumpe 20, welcher aus der Kühlwassertemperatur tmot und der Ansauglufttemperatur tans additiv gewonnen wird.

In 40 wird hiervon ein Temperaturanteil tvfzg subtrahiert, welcher aus der Fahrzeuggeschwindigkeit vfzg gewonnen wird. Hierzu wird in 42 die Fahrzeuggeschwindigkeit vfzg in einen entsprechenden Temperaturanteil umgewandelt und dieser dann in einen Tiefpassfilter 44 eingespeist.

In 46 wird ein weiterer Temperaturanteil trk subtrahiert, welcher letztlich aus dem Kraftstoffdurchfluss durch das Kraftstoffsystem gewonnen wird. Hierzu wird zunächst aus dem Lambdawert lambda und der relativen Luftmasse rl eine relative Kraftstoffmasse rk bestimmt. In einem Block 48 wird hieraus unter Berücksichtigung der Drehzahl nmot der Kurbelwelle der Brennkraftmaschine 10 und eines Faktors C2 ein Kraftstoffstrom bestimmt. Dieser wird in 50 durch Multiplikation entweder mit einer Konstanten C3 oder mit einer Konstanten C4 zu dem Temperaturanteil trk umgewandelt.

Die Auswahl der Konstanten C3 und C4 erfolgt dadurch, dass in 52 die Drehzahl nmot mit einem Grenzwert nmotmx verglichen wird. Bei nmot < nmotmx ist ein Schalter 54 so geschaltet, dass in 50 der Faktor C4 zur Multiplikation verwendet wird. Ist dagegen nmot > nmotmx, ist der Schalter 54 so geschaltet, dass in 50 das Produkt (Block 56) aus C3 und C4 zur Multiplikation verwendet wird. Hierdurch kann der Temperaturanteil, welcher auf dem Kraftstoffdurchfluss basiert, drehzahlabhängig gewichtet werden.

Insgesamt gilt jedoch, dass der Einfluss des Temperaturanteils trk, welcher auf dem Kraftstoffdurchfluss basiert, nur bei einer hohen Kühlwassertemperatur tmot relevant ist. Daher wird in 58 die Kühlwassertemperatur tmot mit einem Grenzwert TMOTMN verglichen. Nur dann, wenn tmot > TMOTMN, wird der oben bestimmte Temperaturanteil trk in einen Tiefpassfilter 60 eingespeist, und das Ergebnis in 46 subtrahiert. In 62 wird schließlich noch ein Temperaturanteil ths addiert, welcher eine evtl. Temperaturerhöhung der Hochdruck-Kraftstoffpumpe 20 im Falle eines Heißstarts berücksichtigt. Er wird aus einem Tiefpassfilter 64 auf eine weiter unten im Detail erläuterte Art und Weise gewonnen.

Aus dem obigen Verfahren ist ersichtlich, dass die dominierende Einflussgröße für die Temperatur thdp der Hochdruck-Kraftstöffpumpe 20 die Kühlwassertemperatur tmot ist, da die Hochdruck-Kraftstoffpumpe 20 direkt an der Brennkraftmaschine 10 bzw. an deren Zylinderkopf angebracht ist. Die Ansauglufttemperatur tans beschreibt zum einen die Untergrenze der Temperatur der Hochdruck-Kraftstoffpumpe 20, zum anderen ist ihr Verlauf charakteristisch für das Verhalten während der Abstellphase der Brennkraftmaschine 10. Die Fahrzeuggeschwindigkeit vfzg beschreibt den Effekt, dass bei höherer Geschwindigkeit vfzg durch die vermehrte Luftbewegung im Motorraum des Kraftfahrzeugs 12 Wärme von der Hochdruck-Kraftstoffpumpe 20 abtransportiert wird. Abhängig vom jeweiligen Einbauort ist dieser Effekt stärker oder schwächer ausgeprägt. In einem nicht dargestellten Ausführungsbeispiel kann der Temperaturanteil tvfzg bei niedriger Geschwindigkeit vfzg ausgeblendet werden.

Aus der Drehzahl nmot und der relativen Kraftstoffmasse rk wird durch Multiplikation mit der Konstanten C2 der von der Kraftstoff-Einspritzvorrichtung 22 abgespritzte Kraftstoff-Massenstrom berechnet. Dieser Kraftstoff-Massenstrom führt ebenfalls Wärme von der Hochdruck-Kraftstoffpumpe 20 ab.

In einem nicht dargestellten Ausführungsbeispiel wird auch berücksichtigt, dass bei höherer Drehzahl der Kurbelwelle der Brennkraftmaschine die Öltemperatur und damit die gesamte, von der Brennkraftmaschine gespeicherte Wärme zunimmt. Dies führt wiederum zu einer Erhöhung der Temperatur der Hochdruck-Kraftstoffpumpe. Ähnlich wie die Fahrzeuggeschwindigkeit kahn dieser Effekt an eine Schwelle gekoppelt werden, so dass dieser nur bei hohen Drehzahlen einen Einfluss hat.

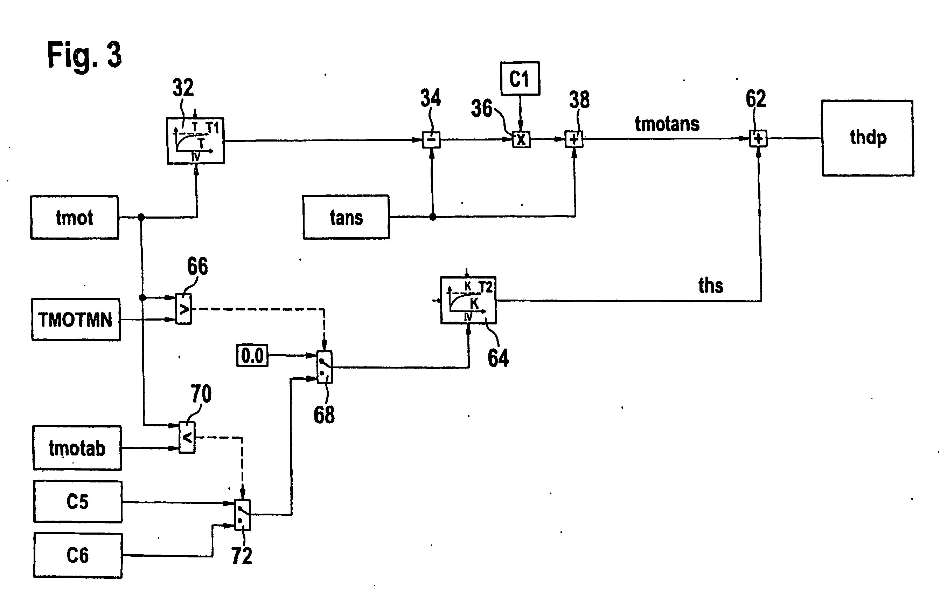

Die Abschätzung der Temperatur thdp der Hochdruck-Kraftstoffpumpe 20 beim Start der Brennkraftmaschine 10 ist aus Figur 3 ersichtlich. Dabei tragen solche Funktionsblöcke, welche funktionsäquivalent zu Funktionsblöcken der Figur 2 sind, die gleichen Bezugszeichen bzw. Bezeichnungen. Sie sind nicht nochmals im Detail erläutert.

Im Gegensatz zu Figur 2 wird der Tiefpassfilter 32 in Figur 3 mit der Kühlwassertemperatur tmot initialisiert. Ferner wird in 66 die Kühlwassertemperatur tmot mit einem Grenzwert TMOTMN verglichen. Ist tmot > TMOTMN, wird der Tiefpassfilter 64 mit einem Wert ungleich Null initialisiert, sonst mit Null. Dies wird durch einen entsprechenden Schalter 68 bestimmt. Außerdem wird in 70 die Kühlwassertemperatur tmot mit einer zuvor abgespeicherten Kühlwassertemperatur tmotab verglichen, welche zu dem Zeitpunkt abgespeichert wurde, zu dem die Brennkraftmaschine 10 abgeschaltet wurde. Ist tmot > TMOTMN und < tmotab, wird der Tiefpassfilter 64 mit einem Faktor C6 initialisiert. Ist tmot > als TMOTMN, jedoch > tmotab, dann wird der Tiefpassfilter mit einem Faktor C5 initialisiert.

Durch den Vergleich in 66 wird festgestellt, ob überhaupt ein Fall eines Heißstarts vorliegt. Durch den Vergleich in 70 kann die Vorgeschichte bei der Bestimmung des entsprechenden Temperaturanteils ths berücksichtigt werden. Wurde z.B. mit hoher Last und bei hoher Umgebungstemperatur gefahren, kann es nach dem Abschalten der Brennkraftmaschine 10 zu einer Erwärmung der Brennkraftmaschine 10 und der Hochdruck-Kraftstoffpumpe 20 kommen. Dies wird durch die Gewichtungsfaktoren C5 und C6 berücksichtigt. Der Tiefpassfilter 64 sorgt dafür, dass nach Ablauf der Zeitkonstanten des Tiefpassfilters 64 der Heißstart-Temperaturanteil ths wieder bei Null liegt.

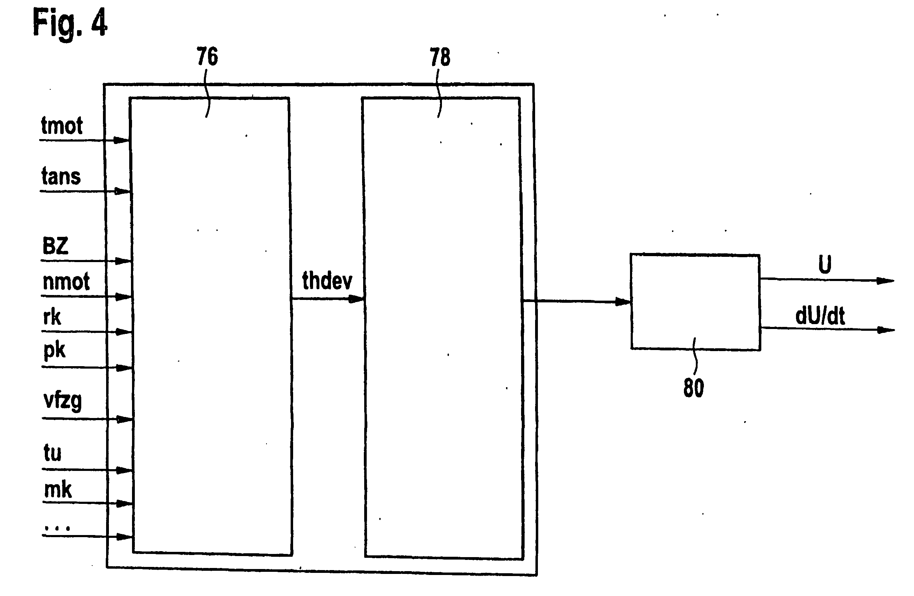

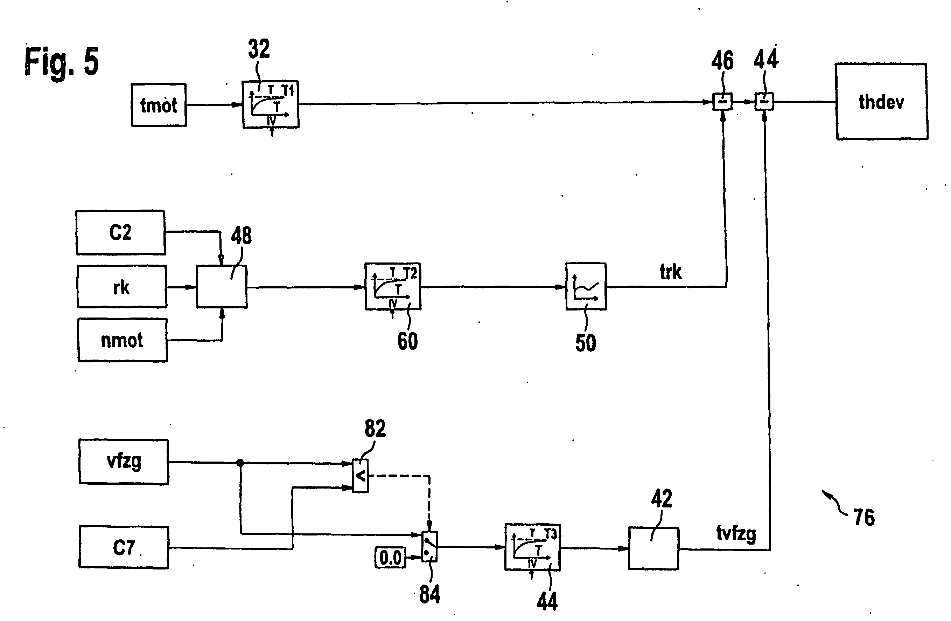

In den Figuren 4 und 5 sind Möglichkeiten zur Abschätzung der Temperatur der Kraftstoff-Einspritzvorrichtung 22 dargestellt. Der Piezoaktor der Kraftstoff-Einspritzvorrichtung 22 weist eine signifikante Änderung des Hubs bei einer Temperaturänderung und ansonsten gleicher Ansteuerspannung auf. Zum optimalen Betrieb der Brennkraftmaschine 10 ist es jedoch erforderlich, dass bei gleicher Ansteuerdauer der Kraftstoff-Einspritzvorrichtung 22 die gleiche Kraftstoffmasse zugemessen wird. Daher ist eine Kompensation der Temperaturabhängigkeit des Hubs erforderlich. Hierfür ist es wiederum notwendig, die Temperatur thdev der Kraftstoff-Einspritzvorrichtung 22 zu schätzen.

Mittels eines weiter unten genauer dargestellten additiven Verfahrens wird in einem Block 76 zunächst die Temperatur thdev der Kraftstoff-Einspritzvorrichtung 22 abgeschätzt. Hierzu werden verschiedene Zustandsgrößen der Brennkraftmaschine 10 verwendet. Zu diesen gehört die Kühlwassertemperatur tmot, die Ansauglufttemperatur tans, der Betriebszustand BZ der Brennkraftmaschine 10 (Homogen, Mager, Schicht etc.), die Drehzahl nmot der Kurbelwelle der Brennkraftmaschine 10, die eingespritzte Kraftstoffmasse rk, der Kraftstoffdruck pk, die Fahrzeuggeschwindigkeit vfzg, die Umgebungstemperatur tu, der Füllstand mk des Kraftstoffbehälters 16 u.a. Zustandsgrößen.

In einem Block 78 wird mit Hilfe der abgeschätzten Temperatur thdev der Kraftstoff-Einspritzvorrichtung 22 ein Korrekturfaktor für die Ansteuerung der Kraftstoff-Einspritzvorrichtung 22 ermittelt. In einer zentralen Ansteuerfunktion 80 wird hieraus eine korrigierte Sollspannung U und ein korrigierter Soll-Spannungsgradient dU/dt für die Ansteuerung des Piezoaktors der Kraftstoff-Einspritzvorrichtung 22 ermittelt. In einem anderen Ausführungsbeispiel wird anstelle der Spannung U die Ladung für den Aktor sowie der erforderliche Ladestrom bestimmt, mit dem der Aktor während der Ladezeit geladen wird.

Ein Ausführungsbeispiel für das im Block 76 ablaufende additive Verfahren ist in Figur 5 dargestellt. In diesem sind wiederum solche Blöcke, welche funktionsäquivalent zu.Blöcken der Figuren 2 und 3 sind, mit den gleichen Bezugszeichen und Bezeichnungen gekennzeichnet. Sie sind nicht nochmals im Detail erläutert.

Anders als bei dem Ausführungsbeispiel in Figur 2 wird der Temperaturanteil trk aus dem Kraftstoff-Massenstrom nicht durch Multiplikation mit Faktoren, sondern mittels einer Kennlinie 50 ermittelt. Außerdem wird die Fahrzeuggeschwindigkeit vfzg in 82 mit einem Grenzwert C7 verglichen. Nur wenn vfzg > C7, wird die Fahrzeuggeschwindigkeit vfzg (Schalter 84) in den Tiefpassfilter 44 eingespeist.

## Patentansprüche

1. Verfahren zum Betreiben eines Kraftstoffsystems (14) einer Brennkraftmaschine (10), bei dem eine Temperatur (thdp; thdev) einer Komponente (20; 22) des Kraftstoffsystems (14) oder eine Temperatur des Kraftstoffs in dieser Komponente anhand von Zustandsgrößen (tmot, tans, vfzg, rk, nmot) der Brennkraftmaschine (10) geschätzt und die geschätzte Temperatur (thdp; thdev) bei der Steuerung und/oder Regelung mindestens einer Komponente (18, 28; 22) des Kraftstoffsystems (14) berücksichtigt wird, **dadurch gekennzeichnet, dass** zur Schätzung der Temperatur (thdp; thdev) der Komponente (20; 22) des Kraftstoffsystems (10) mittels Addition oder Subtraktion eine Summe bzw. Differenz aus mindestens zwei Temperaturanteilen (tmotf, tans, tvfzg, trk, ths) gebildet wird (38, 40, 46, 62), wobei der eine Temperaturanteil (tmotf) aus der Temperatur (tmot) der Brennkraftmaschine (10) und der andere Temperaturanteil (tans, tvfzg, trk, ths) aus einer weiteren Zustandsgröße (tans, vfzg, rk, hs, nmot) der Brennkraftmaschine (10) gewonnen wird.

2. Verfahren nach Anspruch 1, **dadurch gekennzeichnet, dass** als Temperatur der Brennkraftmaschine (10) die Temperatur (tmot) eines Kühlfluids der Brennkraftmaschine (10) verwendet wird.

3. Verfahren nach einem der Ansprüche 1 oder 2, **dadurch gekennzeichnet, dass** als weitere Zustandsgröße eine Kühlfluidtemperatur, eine Schmierstofftemperatur, eine Ansauglufttemperatur (tans), eine Geschwindigkeit (vfzg) eines Transportgeräts (12), in welches die Brennkraftmaschine (10) eingebaut ist, eine Kraftstoffmasse (rk), welche von einer Hochdruck-Kraftstoffpumpe (20) gefördert wird, eine Drehzahl (nmot) der Brennkraftmaschine (10), ein Betriebszustand der Brennkraftmaschine, ein Kraftstoffdruck, eine Umgebungstemperatur, ein Füllstand eines Kraftstoff-Vorratsbehälters, und/oder eine Drehzahl der Hochdruck-Kraftstoffpumpe verwendet wird.

4. Verfahren nach einem der vorhergehenden Ansprüche, **dadurch gekennzeichnet, dass** mindestens einer der Temperaturanteile (tmotf, tvfzg, trk) vor der Summen- bzw. Differenzbildung einem Verzögerungsglied, insbesondere einem Tiefpassfilter (32, 44, 60), zugeführt wird.

5. Verfahren nach Anspruch 4, **dadurch gekennzeichnet, dass** mindestens einer der Temperaturanteile (tvfzg, trk) nur dann berücksichtigt wird, wenn eine entsprechende Zustandsgröße (vfzg, tmot) einen Grenzwert (C7, TMOTMN) mindestens erreicht.

6. Verfahren nach einem der vorhergehenden Ansprüche, **dadurch gekennzeichnet, dass** bei einem Heißstart der Brennkraftmaschine (10) ein Temperaturanteil (ths) addiert wird (62), der von einem Anfangswert (C5, C6) in einem bestimmten Zeitraum auf Null zurückgeht.

7. Verfahren nach Anspruch 6, **dadurch gekennzeichnet, dass** der Anfangswert (C5, C6) des Temperaturanteils (ths) von der Differenz zwischen der aktuellen Temperatur (tmot) der Brennkraftmaschine und der Temperatur (tmotab) der Brennkraftmaschine (10) zum Zeitpunkt des Ausschaltens abhängt.

8. Verfahren nach einem der Ansprüche 6 oder 7, **dadurch gekennzeichnet, dass** der Temperaturanteil (ths) nur dann berücksichtigt wird, wenn die aktuelle Temperatur (tmot) der Brennkraftmaschine (10) einen Grenzwert (TMOTMN) mindestens erreicht.

9. Verfahren nach einem der vorhergehenden Ansprüche, **dadurch gekennzeichnet, dass** der Temperaturanteil (tvfzg, trk) aus der entsprechenden Zustandsgröße (vfzg, rk, nmot) durch Multiplikation der Zustandsgröße (rk, nmot) mit einem Umwandlungsfaktor (C3, C4) oder durch die Einspeisung der Zustandsgröße (vfzg, rk, nmot) in eine Kennlinie (42, 50) gewonnen wird.

10. Verfahren nach einem der vorhergehenden Ansprüche, **dadurch gekennzeichnet, dass** es sich bei der Komponente des Kraftstoffsystems (14), deren Temperatur (thdp, thdev) abgeschätzt wird, um die Hochdruck-Kraftstoffpumpe (20) und/oder um eine Hochdruck-Einspritzvorrichtung (22) handelt, mit der der Kraftstoff in einen Brennraum (24) der Brennkraftmaschine (10) gelangt.

11. Verfahren nach Anspruch 10, dass die Ansteuerung eines Mengensteuerventils (28) der Hochdruck-Kraftstoffpumpe (20) und/oder die Ansteuerung der Leistung einer Niederdruck-Kraftstoffpumpe (18) von der geschätzten Temperatur (thdp) der Hochdruck-Kraftstoffpumpe (20) abhängt, und/oder die Ansteuerung eines Aktors der Hochdruck-Einspritzvorrichtung (22) von der geschätzten Temperatur (thdev) der Hochdruck-Einspritzvorrichtung (22) abhängt.

12. Computerprogramm, **dadurch gekennzeichnet, dass** es zur Durchführung des Verfahrens nach einem der vorhergehenden Ansprüche geeignet ist, wenn es auf einem Computer ausgeführt wird.

13. Computerprogramm nach Anspruch 12, **dadurch gekennzeichnet, dass** es auf einem Speicher, insbesondere auf einem Flash-Memory, abgespeichert ist.

14. Steuer- und/oder Regelgerät (26) zum Betreiben einer Brennkraftmaschine (10), **dadurch gekennzeichnet, dass** es einen Speicher umfasst, auf dem ein Computerprogramm nach einem der Ansprüche 12 oder 13 abgespeichert ist.

15. Brennkraftmaschine (10), mit einem Kraftstoffsystem (14) mit mehreren Komponenten (20, 22), mit Erfassungseinrichtungen, welche Zustandsgrößen (tmot, tans, vfzg, rk, nmot) der Brennkraftmaschine (10) erfassen, und mit einem Steuer- und/oder Regelgerät (26), welches so ausgebildet ist, dass es eine Temperatur (thdp, thdev) einer Komponente (20, 22) des Kraftstoffsystems (14) oder eine Temperatur des Kraftstoffs in dieser Komponente anhand von Zustandsgrößen (tmot, tans, vfzg, rk, nmot) der Brennkraftmaschine (10) schätzen und eine Komponente (18, 22) des Kraftstoffsystems (14) abhängig von der geschätzten Temperatur (thdp, thdev) steuern und/oder regeln kann, **dadurch gekennzeichnet, dass** das Steuer- und Regelgerät (26) so ausgebildet ist, dass es zur Abschätzung der Temperatur (thdp, thdev) der Komponente (20, 22) des Kraftstoffsystems (14) mittels Addition oder Subtraktion eine.Summe bzw. Differenz aus mindestens zwei Temperaturanteilen (tmotf, tans, tvfzg, trk, ths) bildet (38, 40, 46, 62), wobei der eine Temperaturanteil (tmotf) aus der erfassten Temperatur (tmot) der Brennkraftmaschine (10) und der andere Temperaturanteil (tans, tvfzg, trk, ths) aus einer weiteren erfassten Zustandsgröße (tans, vfzg, rk, nmot) der Brennkraftmaschine (10) gewonnen wird.

16. Brennkraftmaschine (10) nach Anspruch 15, **dadurch gekennzeichnet, dass** sie ein Steuer- und/oder Regelgerät (26) nach Anspruch 14 umfasst.

## Revendications

1. Procédé de gestion d'un système d'alimentation en carburant (14) d'un moteur à combustion interne (10) selon lequel :
on évalue une température (thdp, thdev) d'un composant (20, 22) du système d'alimentation en carburant (14) ou une température du carburant dans ces composants à l'aide des grandeurs d'état (tmot, tans, vfzg, rk, nmot) du moteur à combustion interne (10) et on tient compte de la température évaluée (thdp, thdev) pour la commande et/ou la régulation d'au moins un composant (18, 28, 22) du système d'alimentation en carburant (14),
**caractérisé en ce que**
pour évaluer la température (thdp, thdev) des composants (20, 22) du système d'alimentation en carburant (10) on forme par addition ou soustraction, la somme ou la différence d'au moins deux composants de température (tmotf, tans, tvfzg, trk, ths) (38, 40, 46, 62),
on obtient une composante de température (tmotf) à partir de la température (tmot) du moteur à combustion interne (10) et l'autre composante de température (tans, tvfzg, trk, ths) à partir d'une autre grandeur d'état (tans, vfzg, rk, hs, nmot) du moteur à combustion interne (10).

2. Procédé selon la revendication 1,
**caractérisé en ce que**
comme température du moteur à combustion interne (10) on utilise la température (tmot) du fluide de refroidissement du moteur à combustion interne (10).

3. Procédé selon l'une quelconque des revendications 1 ou 2,
**caractérisé en ce que**
comme autre grandeur d'état, on utilise une température de fluide de refroidissement, une température d'agent lubrifiant, une température d'air d'admission (tans), une vitesse (vfzg) d'un appareil de transport (12) équipé du moteur à combustion interne (10), une masse de carburant (rk) fournie par une pompe à carburant à haute pression (20), un régime (nmot) du moteur à combustion interne (10), un état de fonctionnement du moteur à combustion interne, une pression de carburant, une température ambiante, un niveau dans un réservoir de carburant et/ou un régime de pompe à carburant à haute pression.

4. Procédé selon l'une quelconque des revendications précédentes,
**caractérisé en ce qu'**
au moins l'une des composantes de température (tmotf, tvfzg, trk) est appliquée à un élément de temporisation notamment un filtre passe-bas (32, 44, 60) avant de former la somme ou la différence.

5. Procédé selon la revendication 4,
**caractérisé en ce qu'**
au moins l'une des composantes de température (tvfzg, trk) n'est prise en compte que si une grandeur d'état (vfzg, tmot) atteint au moins une valeur limite (C7, TMOTMN).

6. Procédé selon l'une quelconque des revendications précédentes,
**caractérisé en ce qu'**
en cas de démarrage à chaud du moteur à combustion interne (10), on additionne une composante de température (ths) (62) qui passe à zéro à partir d'une valeur initiale (C5, C6) dans un intervalle de temps donné.

7. Procédé selon la revendication 6,
**caractérisé en ce que**
la valeur initiale (C5, C6) de la composante de température (ths) dépend de la différence entre la température actuelle (tmot) du moteur à combustion interne et la température (tmotab) du moteur à combustion interne (10) à l'instant de sa coupure.

8. Procédé selon l'une quelconque des revendications 6 ou 7,
**caractérisé en ce que**
la composante de température (ths) n'est prise en compte que si la température actuelle (tmot) du moteur à combustion interne (10) atteint au moins une valeur limite (TMOTMN).

9. Procédé selon l'une quelconque des revendications précédentes,
**caractérisé en ce que**
la composante de température (tvfzg, trk) s'obtient à partir des grandeurs d'état correspondantes (vfzg, rk, nmot) par multiplication des grandeurs d'état (rk, nmot) avec un coefficient de conversion (C3, C4) ou par l'injection de la grandeur d'état (vfzg, rk, nmot) dans une courbe caractéristique (42, 50).

10. Procedé selon l'une quelconque des revendications précédentes,
**caractérisé en ce que**
les composantes du système d'alimentation en carburant (14) dont on évalue la température (thdp, thdev) sont la pompe à haute pression de carburant (20) et/ou un dispositif d'injection à haute pression (22) qui injecte du carburant dans la chambre de combustion (24) du moteur à combustion interne (10).

11. Procédé selon la revendication 10,
**caractérisé en ce que**
la commande d'une soupape de commande de débit (28) de la pompe à carburant à haute pression (20) et/ou la commande de la puissance d'une pompe à carburant basse pression (18) dépend de la température évaluée (thdp) de la pompe à carburant à haute pression (20) et/ou la commande d'un actionneur du dispositif d'injection à haute pression (22) dépend de la température évaluée (thdev) du dispositif d'injection à haute pression (22).

12. Programme d'ordinateur,
**caractérisé en ce qu'**
il est destiné à la mise en oeuvre du procédé selon l'une quelconque des revendications précédentes appliquées à un ordinateur.

13. Programme d'ordinateur selon la revendication 12,
**caractérisé en ce qu'**
il est enregistré dans une mémoire notamment une mémoire flash.

14. Appareil de commande et/ou de régulation 26 pour gérer un moteur à combustion interne (10),
**caractérisé en ce qu'**
il comporte une mémoire dans laquelle est enregistré un programme d'ordinateur selon l'une quelconque des revendications 12 ou 13.

15. Moteur à combustion interne (10) comportant un système d'alimentation en carburant (14) à plusieurs composants (20, 22), des installations de saisie qui saisissent les grandeurs d'état (tmot, tans, vfzg, rk, nmot) du moteur à combustion interne (10) ainsi qu'un appareil de commande et/ou de régulation (26) réalisé pour évaluer une tepérature (thdp, thdev) d'un composant (20, 22) du système d'alimentation en carburant (14) ou une température du carburant dans ces composants à l'aide des grandeurs d'état (tmot, tans, vfzg, rk, nmot) du moteur à combustion interne (10) et commander et/ou réguler un composant (18, 22) du système d'alimentation en carburant (14) suivant la température évaluée (thdp, thdev),
**caractérisé en ce que**
l'appareil de commande et de régulation (26) est réalisé pour évaluer la température (thdp, thdev) des composants (20, 22) du système d'alimentation en carburant (14) à l'aide de l'addition ou de la soustration d'une somme ou d'une différence d'au moins deux composantes de température (tmotf, tans, tvfzg, trk, ths) (38, 40, 46, 62),
une composante de température (tmotf) étant obtenue à partir de la température saisie (tmot) du moteur à combustion interne (10) et l'autre composante de température (tans, tvfzg, trk, ths) étant obtenue à partir d'une autre grandeur d'état saisie (tans, vfzg, rk, nmot) du moteur à combustion interne (10).

16. Moteur à combustion interne (10) selon la revendication 15,
**caractérisé en ce qu'**
il comporte un appareil de commande et/ou de régulation (26) selon la revendication 14.

## Claims

1. Method for operating a fuel system (14) of an internal combustion engine (10), in which a temperature (thdp; thdev) of a component (20; 22) of the fuel system (14) or a temperature of the fuel in this component is estimated with reference to state variables (tmot, tans, vfzg, rk, nmot) of the internal combustion engine (10) and the estimated temperature (thdp; thdev) is taken into account in the open-loop and/or closed-loop control of at least one component (18, 28; 22) of the fuel system (14), **characterized in that**, in order to estimate the temperature (thdp; thdev) of the component (20; 22) of the fuel system (10), a sum of, or difference between, at least two temperature proportions (tmotf, tans, tvfzg, trk, ths) is formed (38, 40, 46, 62) by means of addition or subtraction, wherein one (tmotf) of the temperature proportions is acquired from the temperature (tmot) of the internal combustion engine (10), and the other temperature proportion (tans, tvfzg, trk, ths) is acquired from a further state variable (tans, vfzg, rk, hs, nmot) of the internal combustion engine (10).

2. Method according to Claim 1, **characterized in that** the temperature (tmot) of a cooling fluid of the internal combustion engine (10) is used as the temperature of the internal combustion engine (10).

3. Method according to one of Claims 1 or 2, **characterized in that** a cooling fluid temperature, a lubricant temperature, an intake air temperature (tans), a velocity (vfzg) of a transportation device (12) in which the internal combustion engine (10) is installed, a fuel mass (rk) which is delivered by a high-pressure fuel pump (20), a rotational speed (nmot) of the internal combustion engine (10), an operating state of the internal combustion engine, a fuel pressure, an ambient temperature, a filling level of a fuel reservoir vessel and/or a rotational speed of the high-pressure fuel pump are used as the further state variable.

4. Method according to one of the preceding claims, **characterized in that** at least one of the temperature proportions (tmotf, tvfzg, trk) is fed to a delay element, in particular a low-pass filter (32, 44, 60) before the formation of a sum or a difference.

5. Method according to Claim 4, **characterized in that** at least one of the temperature proportions (tvfzg, trk) is taken into account only if a corresponding state variable (vfzg, tmot) at least reaches a limiting value (C7, TMOTMN).

6. Method according to one of the preceding claims, **characterized in that** in the event of a hot start of the internal combustion engine (10) a temperature proportion (ths) which returns to zero from an initial value (C5, C6) in a specific time period is added (62).

7. Method according to Claim 6, **characterized in that** the initial value (C5, C6) of the temperature proportion (ths) depends on the difference between the current temperature (tmot) of the internal combustion engine and the temperature (tmotab) of the internal combustion engine (10) at the time of switching off.

8. Method according to one of Claims 6 or 7, **characterized in that** the temperature proportion (ths) is taken into account only if the current temperature (tmot) of the internal combustion engine (10) at least reaches a limiting value (TMOTMN).

9. Method according to one of the preceding claims, **characterized in that** the temperature proportion (tvfzg, trk) is acquired from the corresponding state variable (vfzg, rk, nmot) by multiplying the state variable (rk, nmot) by a conversion factor (C3, C4) or by feeding the state variable (vfzg, rk, nmot) into a characteristic curve (42, 50).

10. Method according to one of the preceding claims, **characterized in that** the component of the fuel system (14) whose temperature (thdp, thdev) is estimated is the high-pressure fuel pump (20) and/or a high-pressure injection device (22) with which the fuel is fed into a combustion chamber (24) of the internal combustion engine (10).

11. Method according to Claim 10, **characterized in that** the actuation of a quantity control valve (28) of the high-pressure fuel pump (20) and/or the actuation of the power of a low-pressure fuel pump (18) depends on the estimated temperature (thdp) of the high-pressure fuel pump (20), and/or the actuation of an actuator of the high-pressure injection device (22) depends on the estimated temperature (thdev) of the high-pressure injection device (22).

12. Computer program, **characterized in that** it is suitable for carrying out the method according to one of the preceding claims if it is run on a computer.

13. Computer program according to Claim 12, **characterized in that** it is stored on a memory, in particular on a flash memory.

14. Open-loop and/or closed-loop control device (26) for operating an internal combustion engine (10), **characterized in that** it comprises a memory on which a computer program according to one of Claims 12 or 13 is stored.

15. Internal combustion engine (10) having a fuel system (14) with a plurality of components (20, 22), having sensing devices which sense state variables (tmot, tans, vfzg, rk, nmot) of the internal combustion engine (10), and having an open-loop and/or a closed-loop control device (26) which is embodied in such a way that it can estimate a temperature (thdp, thdev) of a component (20, 22) of the fuel system (14) or a temperature of the fuel in this component with reference to state variables (tmot, tans, vfzg, rk, nmot) of the internal combustion engine (10) and can perform open-loop and/or closed-loop control of a component (18, 22) of the fuel system (14) as a function of the estimated temperature (thdp, thdev), **characterized in that** the open-loop and closed-loop control device (26) is embodied in such a way that, in order to estimate the temperature (thdp, thdev) of the component (20, 22) of the fuel system (14), it forms (38, 40, 46, 62) a sum of, or difference between, at least two temperature proportions (tmotf, tans, tufzg, trk, ths) by means of addition or subtraction, wherein one (tmotf) of the temperature proportions is acquired from the sensed temperature (tmot) of the internal combustion engine (10), and the other temperature proportion (tans, tvfzg, trk, ths) is acquired from a further sensed state variable (tans, vfzg, rk, nmot) of the internal combustion engine (10).

16. Internal combustion engine (10) according to Claim 15, **characterized in that** it comprises an open-loop and/or a closed-loop control device (26) according to Claim 14.
